# EUROPÄISCHE PATENTSCHRIFT

(11) **EP 4 136 399 B1**
(45) Veröffentlichungstag und Bekanntmachung des Hinweises auf die Patenterteilung: **26.06.2024**
(21) Anmeldenummer: 21719877.9
(22) Anmeldetag: 14.04.2021
(51) Int. Cl.: F28F 3/10, F28F 21/06, F28F 3/04, F28D 9/00

(54) **PLATTENWÄRMETAUSCHER MIT LOKAL VARIIERENDER WÄRMELEITFÄHIGKEIT**
PLATE HEAT EXCHANGER HAVING A LOCALLY VARYING THERMAL CONDUCTIVITY
ÉCHANGEUR DE CHALEUR À PLAQUES DOTÉ DE CONDUCTIVITÉ THERMIQUE À VARIATION LOCALE

(30) Priorität: 16.04.2020 DE 102020204837
(43) Veröffentlichungstag der Anmeldung: 22.02.2023
(73) Patentinhaber: Robert Bosch GmbH, 70442 Stuttgart (DE)
(72) Erfinder: BAUER, Harald, 71139 Ehningen (DE)
(86) Internationale Anmeldenummer: PCT/EP2021/059644
(87) Internationale Veröffentlichungsnummer: WO 2021/209494

(56) Entgegenhaltungen:
- EP-A1- 0 203 213
- WO-A1-90/01977
- CN-U- 203 820 488
- US-A1- 2018 320 988
- US-B2- 6 899 163

## Beschreibung

Die Erfindung betrifft einen Wärmetauscher, insbesondere für den Einsatz in einer Destillationsanlage, aufweisend einen Einbaurahmen und eine als ein Stapel aus mehreren Platten ausgestaltete Basiseinheit, wobei die Platten der Basiseinheit zum Ausbilden von Fluidkanälen eine Prägung aufweisen, wobei mindestens ein Fluidkanal zum Führen eines Fluids zwischen mindestens zwei Platten ausgebildet ist. Des Weiteren betrifft die Erfindung eine Anlage mit mindestens einem derartigen Wärmetauscher.

### Stand der Technik

Bei der Herstellung von Destillationsanlagen stellt der Wärmetauscher eine der teuersten Komponenten dar, da der Wärmetauscher präzise auf den Prozess der jeweiligen Destillationsanlage, wie beispielsweise der Frischwassergewinnung, abgestimmt wird. Der Wärmetauscher kann dabei als ein kombinierter Verdampfer und Kondensator ausgestaltet sein.

Aus Metall hergestellte Wärmetauscher weisen eine gute Wärmeleitfähigkeit auf, welche mit einer erhöhten Fouling-Gefahr verbunden ist. Des Weiteren sind Kunststoffwärmeübertrager bzw. aus thermisch leitfähigem Kunststoff hergestellte Wärmetauscher bekannt. Derartige, aus Kunststoff hergestellte, Wärmetauscher weisen zwar eine verringerte Fouling-Gefahr auf, sind jedoch hinsichtlich der Wärmeleitfähigkeit eingeschränkt.

Bei der Verwendung von Wärmetauschern aus Metall, wie beispielsweise Titan oder Edelstahl, kann die Diebstahlgefahr steigen, da das Metall geschmolzen und beliebig weiterverwendet werden kann.

Als weiterer Stand der Technik sind die EP 0 203 213 A1 und die US 2018/320988 A1 bekannt geworden. EP 0 203 213 A1 zeigt einen Wärmetauscher nach dem Oberbegriff des Anspruchs1.

### Offenbarung der Erfindung

Die der Erfindung zugrunde liegende Aufgabe kann darin gesehen werden, einen Wärmetauscher vorzuschlagen, welcher die Vorteile eines aus einem Kunststoff hergestellten Wärmetauschers mit den Vorteilen eines aus einem Metall hergestellten Wärmetauschers kombiniert.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Wärmetauscher, insbesondere für den Einsatz in einer Destillationsanlage, bereitgestellt. Der Wärmetauscher weist einen Einbaurahmen und eine als ein Stapel aus mehreren Platten ausgestaltete Basiseinheit auf, wobei die Platten der Basiseinheit zum Ausbilden von Fluidkanälen eine Prägung aufweisen. Mindestens ein Fluidkanal ist zum Führen eines Fluids zwischen mindestens zwei Platten ausgebildet. Bevorzugterweise bestehen die Platten aus einem wärmeleitfähigen Kunststoff, wobei mindestens eine Platte der Basiseinheit mindestens einen Bereich mit einer verringerten Wärmeleitfähigkeit und mindestens einen Bereich mit einer erhöhten Wärmeleitfähigkeit aufweist.

Ein derartiger Wärmetauscher weist Platten auf, welche eine lokale Variation der Wärmeleitfähigkeit umfassen. Dabei ist die Wärmeleitfähigkeit lokal durch Einbringen von Füllstoffen und/oder Füllpartikeln gesteigert. Insbesondere können Bereiche mit einer thermischen Isolation und Bereiche mit einer thermischen Leitfähigkeit geschaffen werden, welche eine zusätzliche Isolierung durch Gummibeschichtungen oder Silikonbeschichtungen vermeiden.

Die jeweiligen Platten können zu einem Block bzw. zu einer Basiseinheit dauerhaft verbunden werden. Derartige Platten können Ausbeulungen bzw. Prägungen aufweisen, durch welche zwischen mehreren gestapelte Platten Fluidkanäle entstehen, um Fluide parallel zu und zwischen den Platten zu leiten. Die Platten können vorzugsweise im Spritzgussverfahren hergestellt werden. Dabei wird der Kunststoff bzw. das Polymer zum Herstellen der Platten derart in eine entsprechende Spritzgussform eingebracht, dass die Füllpartikel in ihrer Ausrichtung eingestellt werden.

Bei der Herstellung der Platten kann die Wärmeleitfähigkeit im Spritzguss durch geeignetes Platzieren der Anspritzstellen gesteuert werden. Die Ausrichtung der Füllpartikeln, welche als Leitpartikel für den Wärmetransport dienen, und damit die thermische Leitfähigkeit lassen sich somit lokal steuern. Damit können Wärmetauscherplatten beispielsweise im Randbereich isolierend gebildet werden, im Bereich der Wärmetauscherfläche bleibt die Wärmeleitfähigkeit hoch. Eine thermische Isolation der Wärmeleitplatten, wie bei einer Metallausführung, kann somit entfallen.

Durch die Verwendung von Platten aus einem Kunststoff können die Fouling-Gefahr reduziert und Wartungsintervalle verlängert werden. Des Weiteren kann der Wärmetauscher durch die Verwendung von Kunststoff-Platten technisch einfach und kosteneffizient hergestellt werden. Durch die lokale Steigerung der thermischen Leitfähigkeit kann die Dimension des Wärmetauschers gegenüber dem Einsatz eines üblichen thermisch leitfähigen Polymers verringert werden.

Der Wärmetauscher kann als eine kombinierte Verdampfer/Kondensator Einheit, als ein Plattenwärmeübertrager, ein Fallfilmverdampfer und dergleichen ausgestaltet sein. Des Weiteren kann der Wärmetauscher bei Vakuumprozessen oder bei der Brüdenkompression eingesetzt werden.

Bei einer Ausführungsform sind die Platten der Basiseinheit zumindest umfangsseitig fluiddicht miteinander verbunden, wobei jede Platte mindestens eine Öffnung zum Leiten eines Fluids durch den Fluidkanal aufweist. Die mindestens eine Öffnung ist mit einem Fluideinlass und/oder einem Fluidauslass der Basiseinheit verbunden.

Vorzugsweise ist ein umfangsseitiger Rand der Platten als ein Randbereich mit verringerter Wärmeleitfähigkeit ausgestaltet. Durch diese Maßnahme kann das Einbringen einer zusätzlichen thermischen Isolierung am Rand der Platten entfallen. Ein derartiger Wärmetauscher kann somit schneller und kosteneffizienter hergestellt werden.

Nach einer weiteren Ausführungsform umgibt der Randbereich der Platten umfangsseitig mindestens einen Zentralbereich der Platte, wobei der Zentralbereich eine gegenüber dem Randbereich erhöhte Wärmeleitfähigkeit aufweist. Hierdurch kann der Zentralbereich als ein thermisch aktiver Bereich mit einer hohen Wärmeleitfähigkeit ausgebildet sein. Dies kann beispielsweise alleine durch die Art, wie der Kunststoff in die Spritzgussform geführt wird umgesetzt werden.

Der Randbereich bleibt vorzugsweise thermisch weniger leitfähig. Alternativ oder zusätzlich kann der Randbereich ohne Füllpartikel ausgeführt sein, so dass der Randbereich thermisch isolierend bleibt. Hierdurch kann ein schnelles Start-Stopp Verhalten bei dezentralem Einsatz zur Trinkwasserherstellung realisiert werden.

Die Platten sind vorzugsweise als dünne, konturierte Elemente ausgeführt. Die Konturen bilden Prägungen und somit die Querschnittsformen für den mindestens einen Fluidkanal aus. In die Platten sind Öffnungen eingebracht, welche als Zuführungen von mindestens einem Fluid in den mindestens einen Fluidkanal dienen.

Die Füllpartikel können beispielsweise aus einem Metall oder aus Kohlestoff bestehen. Insbesondere kann die thermische Leitfähigkeit durch die Ausrichtung der Füllpartikel beim Formen, Spritzgießen oder Tiefziehen oder während der Aushärtung des Kunststoffs in einer Spritzgussform eingestellt werden. Durch die erhöhte thermische Leitfähigkeit der Füllpartikel gegenüber dem Polymer stellt sich bei Verwendung von Füllpartikeln, die eine längere und mindestens eine kürzere Länge in der Projektion aufweisen, eine anisotrope Wärmeleitfähigkeit der Platten bzw. des ausgehärteten Materials ein. Ein Wärmetransport durch oder entlang der Platte folgt dabei im Wesentlichen der Ausrichtung der Füllpartikel. Beispielsweise kann die thermische Leitfähigkeit maximiert werden, wenn die Füllpartikel Kontaktbrücken zwischen beiden Seiten der Platte ausbilden.

Gemäß einem Ausführungsbeispiel weisen die Platten der Basiseinheit eine gleiche Anordnung oder eine voneinander abweichende Anordnung der Bereiche mit verringerter Wärmeleitfähigkeit und der Bereiche mit erhöhter Wärmeleitfähigkeit auf. Durch diese Maßnahme können die Platten der Basiseinheit gleich oder ungleich ausgestaltet sein. Es ist somit eine gezielte Steuerung der Wärmeleitfähigkeit und der Leistungsfähigkeit der Basiseinheit möglich. Insbesondere können einzelne Platten der Basiseinheit eine variierende und einzelne Platten eine konstante Wärmeleitfähigkeitsverteilung aufweisen. Bei einer weiteren Ausgestaltung können alle Platten eine variierende Wärmeleitfähigkeitsverteilung aufweisen.

Nach einer weiteren Ausführungsform sind die Platten der Basiseinheit umfangsseitig miteinander verklebt oder verschweißt. Hierdurch ist die Basiseinheit des Wärmetauschers als ein integraler Block ausgeführt.

Durch die optimierte Wärmeleitfähigkeitsverteilung der Platten der Basiseinheit können systemimmanent die Leistungsfähigkeit und die Baugröße gegenüber einem metallischen Wärmeübertrager vergleichbar ausgestaltet sein. Gleichzeitig kann die Neigung zu Fouling und das Gewicht des Wärmetauschers auf bis zu einem Drittel verringert werden. Damit kann der Wärmeübertragung, insbesondere bei Ausführung als Wechselteil mit universellen Anschlüssen technisch einfach ausgebaut und extern gereinigt werden.

Gemäß der Erfindung sind die Platten der Basiseinheit aus einem thermisch leitfähigen Polymer, wie beispielsweise PVDF, PE, PVC, PVCC, PP oder PFA, mit mindestens einem Füllstoff in Form von Füllpartikeln hergestellt. Hierdurch können die Platten als ein Spritzgussteil hergestellt werden. Dabei ist eine gezielte Steuerung der Füllpartikeldichte und der Ausrichtung der Füllpartikel möglich, welche eine Steuerung der lokalen Wärmeleitfähigkeit entlang einer flächigen Ausdehnung der Platten ermöglichen.

Des Weiteren sind Basiseinheiten aus einem thermisch leitfähigen Polymer nicht attraktiv für Diebe und ermöglichen somit einen besonders sicheren Betrieb.

Nach der Erfindung ist die Wärmeleitfähigkeit der Bereiche der Platten der Basiseinheit durch eine Ausrichtung von Füllpartikeln und/oder eine Füllpartikeldichte einstellbar. Insbesondere können die Füllpartikel zum Ausbilden von Kontaktbrücken zwischen eingesetzt werden, um eine hohe thermische Leitfähigkeit zu erzielen. Die Abwesenheit von Füllpartikeln kann zum Ausbilden von thermisch isolierenden Bereichen eingesetzt werden. Die Füllpartikeldichte kann somit auch 0 sein, um eine hohe thermische Isolierung zu erzielen.

Alternativ oder zusätzlich können Füllpartikel zum Erhöhen der Wärmeleitfähigkeit und/oder Füllpartikel zum Verringern der Wärmeleitfähigkeit während des Spritzgussverfahrens lokal in die Spritzgussform eingebracht werden, um eine variierende Wärmeleitfähigkeitsverteilung entlang der Platten auszubilden.

Gemäß einem Ausführungsbeispiel sind zwischen den Platten der Basiseinheit Fluidkanäle zum Führen eines Heizfluids, Fluidkanäle zum Führen eines zu kondensierenden Fluids und Fluidkanäle zum Führen eines Kühlfluids ausgebildet, wobei die Fluidkanäle zum Führen des Heizfluids und die Fluidkanäle zum Führen des Kühlfluids durch mindestens einen Bereich mit geringer Wärmeleitfähigkeit voneinander beabstandet sind. Dies kann beispielsweise bei einem Wärmetauscher vorteilhaft sein, bei welchem in einem Abschnitt ein Trinkwasserdampf kondensiert wird, in einem Zwischenabschnitt Tropfenabscheidung stattfinden soll und in einem Abschnitt eine Erwärmung zum Bilden des Trinkwasserdampfs durchgeführt wird. Der Zwischenabschnitt kann somit eine reduzierte Wärmeleitfähigkeit aufweisen, um die Effizienz des Wärmetauschers zu erhöhen und eine optimale Trennung der Prozesse zu erzielen.

Bei einer weiteren Ausführungsform sind die Basiseinheit und/oder die Platten der Basiseinheit durch Schraubverbindungen oder durch Schnellspannverbindungen in dem Einbaurahmen angeordnet. Werden die Platten als Block bzw. als Basiseinheit in sich gedichtet, dann kann der Block an den Ein- und Austrittsstellen für die Fluide technisch einfach mittels umfangsseitiger Dichtungen an eine Destillationsanlage angeschlossen werden. Es werden hierdurch keine hohen Vorspannkräfte und keine schweren Platten des Einbaurahmens benötigt.

Durch das geringe Gewicht des Wärmetauschers kann die Demontage einfacher und schneller durchgeführt werden. Hierdurch wird auch eine externe Reinigung des Wärmetauschers vereinfacht.

Nach einem weiteren Aspekt der Erfindung wird eine Anlage zur thermischen Behandlung von mindestens einem Fluid bereitgestellt. Die Anlage kann beispielsweise als eine Trinkwasserdestillationsanlage ausgestaltet sein und weist mindestens einen erfindungsgemäßen Wärmetauscher auf. Der Wärmetauscher weist vorzugsweise eine aus mindestens einem bereichsweise thermisch leitfähigen Polymer hergestellte Basiseinheit auf, welche auf die Temperaturen des mindestens einen Fluids der Anlage ausgelegt ist.

Die Anlage kann beispielsweise zur Wasseraufbereitung zur lokalen Trinkwasserherstellung mit einem Franchise-Konzept geeignet sein. Des Weiteren kann die Betriebszeit der Anlage maximiert werden, da der eingebaute Wärmetauscher bei Bedarf durch einen Ersatz-Wärmetauscher austauschbar ist. Der Stillstand der Anlage beschränkt sich lediglich auf den Wärmetauscher-Austausch. Des Weiteren kann der Ausbau und Einbau des Wärmetauschers aufgrund des geringeren Gewichts des Wärmetauschers vereinfacht und beschleunigt werden. Durch die präzise Abstimmung des Wärmetauschers auf die Anlage hinsichtlich der eingesetzten Temperaturen kann ein Manipulationsschutz realisiert werden.

Soll die Ausbringung der Anlage vergrößert werden, beispielsweise bei einer steigenden Kundenzahl und daraus resultierendem Wasserbedarf, kann ein Anlagenbetreiber die Anlage durch den Einbau einer thermisch optimierten Basiseinheit und/oder Wärmetauschers aufrüsten. Ein thermisch optimierter Wärmetauscher weist Platten auf, welche eine Wärmeleitfähigkeitsverteilung mit Bereichen geringer Wärmeleitfähigkeit und mit Bereichen höherer Wärmeleitfähigkeit umfassen. Hierdurch kann die Effizienz des Wärmetauschers verbessert und der resultierende Trinkwasserumsatz gesteigert werden.

Wird das System bzw. die Anlage bei Nennleistung auf die thermischen Eigenschaften des gefüllten Polymers der Platten ausgelegt, funktioniert die Anlage nur mit diesem Block bzw. dieser Basiseinheit des Wärmetauschers. Nachbauten bzw. Plagiate können somit die Frischwasserproduktionsrate nicht erreichen, wenn sie aus einem alternativen Polymer gebaut sind.

Gemäß einem Ausführungsbeispiel ist der Wärmetauscher als ein Plattenwärmeübertrager oder als ein Fallstromverdampfer in Plattenbauweise ausgestaltet. Hierdurch kann der Wärmetauscher flexibel in unterschiedlich ausgestalteten Anlagen eingesetzt werden. Durch die Herstellung der Platten des Wärmetauschers im Spritzgussverfahren und einem anschließenden Verbindungsschritt der Platten können beliebige Formen und Fluidkanal-Anordnungen für unterschiedliche Anwendungen realisiert werden.

Nach einer weiteren Ausführungsform ist die Anlage mit mindestens einem ersten Wärmetauscher aus einem Kunststoff betreibbar, wobei der erste Wärmetauscher durch einen als Austauschteil ausgestalteten erfindungsgemäßen Wärmetauscher austauschbar ist. Hierdurch kann der Wärmetauscher als ein Wechselteil zur Leistungssteigerung ausgeführt sein. Die Anlage kann vom Grundkonzept her für einen Polymerwärmeübertrager ausgelegt sein, welcher thermisch nicht optimiert ist und somit eine konstante Wärmeleitfähigkeitsverteilung aufweist. Dieser erste Wärmetauscher kann zur Leistungssteigerung durch einen thermisch optimierten Wärmetauscher zur Leistungssteigerung ersetzt werden.

Im Folgenden werden anhand von stark vereinfachten schematischen Darstellungen bevorzugte Ausführungsbeispiele der Erfindung näher erläutert. Hierbei zeigen
- Fig. 1: eine schematische Darstellung einer Anlage gemäß einer Ausführungsform,
- Fig. 2,3: schematische Querschnitte eines Wärmetauschers gemäß einer Ausführungsform,
- Fig. 4: eine Explosionsdarstellung eines Wärmetauschers gemäß einem weiteren Ausführungsbeispiel und
- Fig. 5: schematische Detailansichten eines Bereichs mit einer verringerten Wärmeleitfähigkeit und eines Bereichs mit einer erhöhten Wärmeleitfähigkeit.

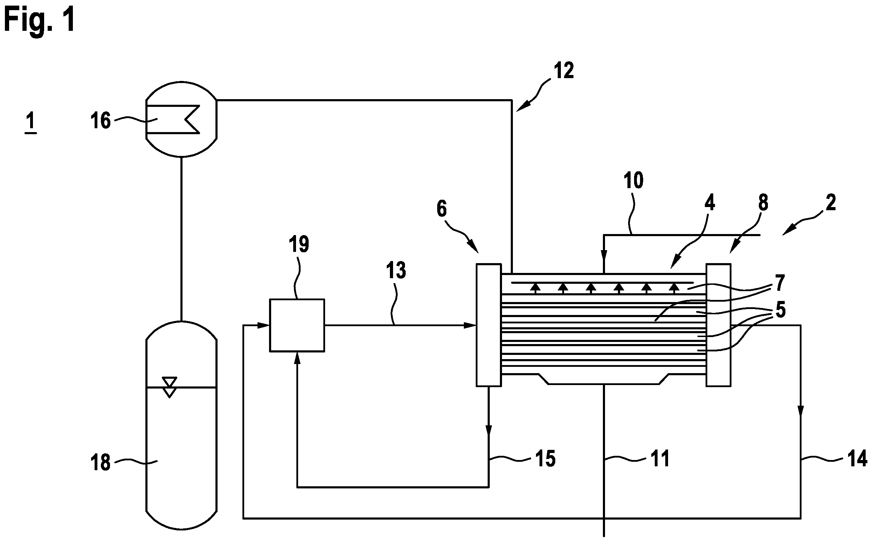

Die Figur 1 zeigt eine schematische Darstellung einer Anlage 1 gemäß einer Ausführungsform. Die Anlage 1 ist beispielhaft als eine Trinkwasseraufbereitungsanlage bzw. Destillationsanlage ausgestaltet, welche Trinkwasser aus Salzwasser durch Destillieren gewinnt. Die Anlage 1 weist einen Wärmetauscher 2 auf.

Der Wärmetauscher 2 weist eine Basiseinheit 4 auf. Die Basiseinheit 4 ist in einem Einbaurahmen 6, 8 eingesetzt und besteht aus einer Vielzahl von Platten 5. Durch die Platten 5 werden Fluidkanäle 7 ausgebildet, welche parallel zu einer flächigen Ausdehnung der Platten 5 verlaufen. Insbesondere können zwischen jeweils zwei Platten 5 ein oder mehrere Fluidkanäle 7 vorgesehen sein. Die Fluidkanäle 7 dienen zum Führen von Fluiden, wie beispielsweise Dampf oder Wasser.

Die Platten 5 sind aus mindestens einem Polymer hergestellt. Das Polymer der Platten 5 ist zumindest bereichsweise mit Füllpartikeln versehen, um eine gezielte lokale Variation der Wärmeleitfähigkeit zu erzielen.

Die Basiseinheit 4 ist austauschbar in dem Einbaurahmen 6, 8 angeordnet. Beispielsweise kann die Basiseinheit 4 in dem Einbaurahmen 6, 8 verschraubt oder durch Spannhaken eingespannt sein.

Der Einbaurahmen 6, 8 weist einen Anschlussabschnitt 6 und einen Konterabschnitt 8 auf, zwischen welchen die Basiseinheit 4 angeordnet ist. Die Fluidkanäle 7 der Basiseinheit 4 sind im dargestellten Ausführungsbeispiel fluidführend mit Anschlüssen 10, 11, 12, 13, 14, 15 des Anschlussabschnitts 6 verbunden.

Die Anschlüsse 10, 11, 12, 13, 14, 15 des Anschlussabschnitts 6 sind beispielsweise als ein Anschluss 10 für Salzwasserzufuhr, ein Anschluss 11 für den Abfluss der Salzlake, ein Anschluss 12 zum Abführen des Trinkwasserdampfs, ein Anschluss 13 zur Heizdampfzufuhr, ein Anschluss 14 für einen Heizdampfrücklauf und ein Anschluss 15 für einen Kondensatrücklauf des Heizdampfs ausgestaltet.

Es kann beispielsweise ein Fluidkanal 7 zum Führen von Heizdampf verwendet werden. Ein benachbarter Fluidkanal 7 kann Salzwasser aus der Salzwasserzufuhr 10 führen und somit auf Siedetemperatur erhitzen. Der resultierende Trinkwasserdampf kann durch den Anschluss 12 für den Trinkwasserdampf entweichen und in einem Kondensator 16 verflüssigt werden. Das verflüssigte Trinkwasser kann anschließend in einem Sammelbehälter 18 aufgefangen werden.

Der Heizdampf kann mit Hilfe eines Dampfgenerators 19 erzeugt und über den Anschluss 13 für Heizdampf in den Wärmetauscher 2 gelangen. Der aus dem Wärmetauscher 2 ausgetretene Heizdampf und das Kondensat des Heizdampfs können über die entsprechenden Anschlüsse 14, 15 erneut dem Dampfgenerator 19 zugeführt werden.

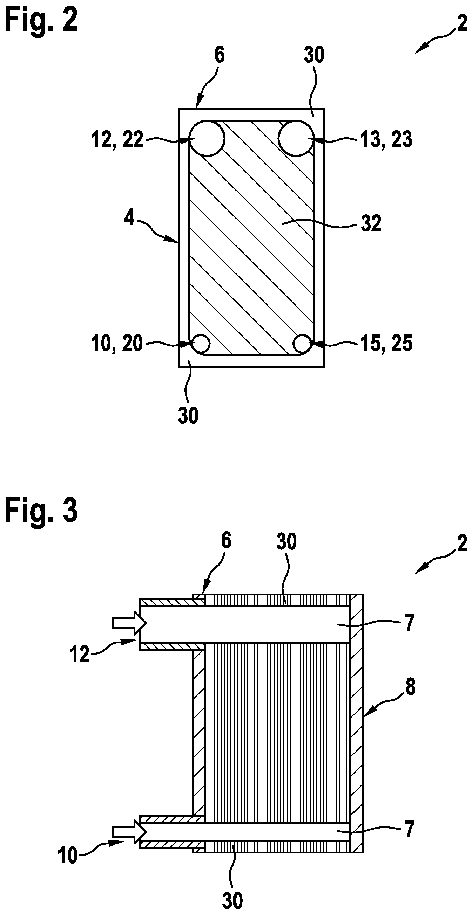

In der Figur 2 und der Figur 3 sind schematische Querschnitte des Wärmetauschers 2 gemäß einer Ausführungsform dargestellt. Der Wärmetauscher 2 weist eine Basiseinheit 4 auf, welche aus mehreren Platten 5 hergestellt ist. Die Platten 5 sind umfangsseitig miteinander verschweißt sodass die Basiseinheit 4 als ein integral zusammenhängender Block geformt ist. Der Block bzw. die Basiseinheit 4 ist zwischen dem Anschlussabschnitt 6 und dem Konterabschnitt 8 des Einbaurahmens eingespannt.

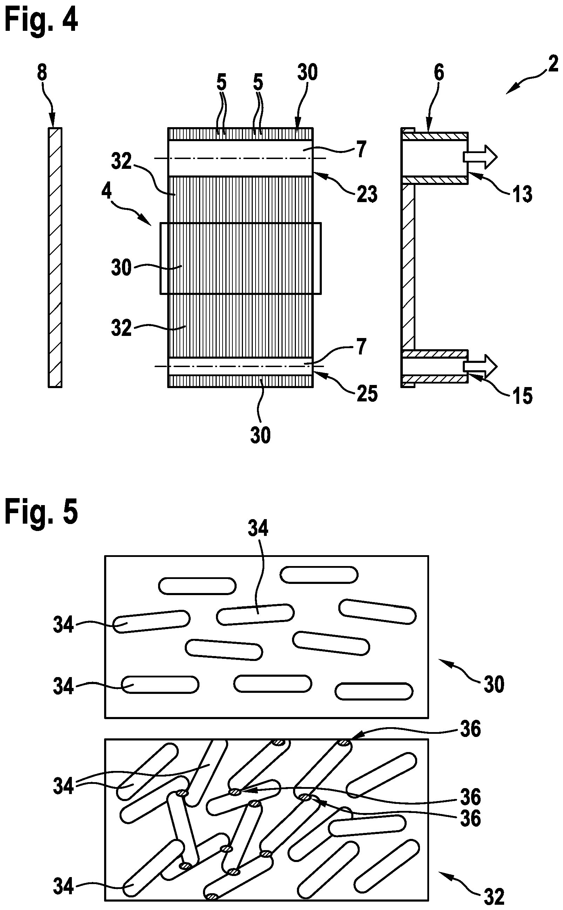

In der Figur 4 ist eine Explosionsdarstellung des Wärmetauschers 2 zum Veranschaulichen des Aufbaus des Wärmetauschers 2 und der Anordnung der Basiseinheit 4 gezeigt.

Die Platten 5 der Basiseinheit 4 sind zumindest umfangsseitig fluiddicht miteinander verbunden. Jede Platte 5 weist Öffnungen 20, 22, 23, 25 zum Leiten von Fluiden durch den mindestens einen Fluidkanal 7 auf. Die Öffnungen 20, 22, 23, 25 sind mit entsprechenden Fluideinlässen 10, 13 und Fluidauslässen 12, 15 fluidleitend verbunden.

Ein umfangsseitiger Rand 30 der Platten 5 ist als ein Randbereich bzw. Bereich 30 mit verringerter Wärmeleitfähigkeit ausgestaltet. Der Randbereich 30 ist beispielsweise aus einem Polymer ohne Zugabe von Füllpartikeln hergestellt und wirkt vorzugsweise thermisch isolierend.

Der Randbereich 30 der Platten 5 umgibt gemäß dem Ausführungsbeispiel umfangsseitig einen Zentralbereich 32. Der Zentralbereich 32 entspricht einem Bereich 32 mit einer erhöhten Wärmeleitfähigkeit und weist eine gegenüber dem Randbereich 30 erhöhte Wärmeleitfähigkeit auf. Der Zentralbereich 32 kann vorzugsweise Füllpartikel aufweisen, welche während eines Spritzgussverfahrens zusätzlich lokal in das Polymer injiziert wurden, um einen verbesserten Wärmetransport zu ermöglichen.

Das Polymer der Platten 5 kann beispielsweise PVDF, PE, PVC, PVCC, PP oder PFA sein.

In der Figur 4 ist der Zentralbereich 32 durch einen zusätzlichen Bereich 30 mit verringerter Wärmeleitfähigkeit unterteilt, um beispielsweise die Heizdampfzufuhr 13 von anderen Anschlüssen 10, 12, 15 thermisch zu trennen.

Die Figur 5 zeigt schematische Detailansichten eines Bereichs 30 mit einer verringerten Wärmeleitfähigkeit und eines Bereichs 32 mit einer erhöhten Wärmeleitfähigkeit. Dabei wird Veranschaulicht, dass Füllpartikel 34 zum Ausbilden von Kontaktbrücken 36 eingesetzt werden, um eine hohe thermische Leitfähigkeit zu erzielen. Die Abwesenheit von Füllpartikeln 34 kann zum Ausbilden von thermisch isolierenden Bereichen 30 eingesetzt werden. Die Füllpartikeldichte kann somit auch 0 sein, um eine hohe thermische Isolierung zu erzielen.

Durch ein Einbringen von Füllpartikeln 34 und ein Ausrichten der Füllpartikel 34 können Kontaktbrücken 36 hergestellt werden, welche die Wärmeleitfähigkeit steigern bzw. maximieren können.

## Patentansprüche

1. Wärmetauscher (2), insbesondere für den Einsatz in einer Destillationsanlage, aufweisend einen Einbaurahmen (6, 8) und eine als ein Stapel aus mehreren Platten (5) ausgestaltete Basiseinheit (4), wobei die Platten (5) der Basiseinheit (4) zum Ausbilden von Fluidkanälen (7) eine Prägung aufweisen, wobei mindestens ein Fluidkanal (7) zum Führen eines Fluids zwischen mindestens zwei Platten (5) ausgebildet ist, wobei die Platten (5) aus einem wärmeleitfähigen Kunststoff bestehen, wobei mindestens eine Platte (5) der Basiseinheit (4) mindestens einen Bereich (30) mit einer verringerten Wärmeleitfähigkeit und mindestens einen Bereich (32) mit einer erhöhten Wärmeleitfähigkeit aufweist, **dadurch gekennzeichnet, dass** die Platten der Basiseinheit (4) aus einem thermisch leitfähigen Polymer mit mindestens einem Füllstoff in Form von Füllpartikel hergestellt sind, und wobei die Wärmeleitfähigkeit der Bereiche (30, 32) der Platten (5) der Basiseinheit (4) durch eine Ausrichtung von Füllpartikeln (34) und/oder eine Füllpartikeldichte einstellt ist.

2. Wärmetauscher nach Anspruch 1, wobei die Platten (5) der Basiseinheit (4) zumindest umfangsseitig fluiddicht miteinander verbunden sind, wobei jede Platte (5) mindestens eine Öffnung (20, 22, 23, 25) zum Leiten eines Fluids durch den Fluidkanal (7) aufweist, wobei die mindestens eine Öffnung (20, 22, 23, 25) mit einem Fluideinlass (10, 13) und/oder einem Fluidauslass (12, 15) des Einbaurahmens (6, 8) verbunden ist, wobei ein umfangsseitiger Rand der Platten (5) als ein Randbereich (30) mit verringerter Wärmeleitfähigkeit ausgestaltet ist.

3. Wärmetauscher nach Anspruch 1 oder 2, wobei der Randbereich (30) der Platten (5) mindestens einen Zentralbereich (32) umfangsseitig umgibt, wobei der Zentralbereich (32) eine gegenüber dem Randbereich (30) erhöhte Wärmeleitfähigkeit aufweist.

4. Wärmetauscher nach einem der Ansprüche 1 bis 3, wobei die Platten (5) der Basiseinheit (4) eine gleiche Anordnung oder eine voneinander abweichende Anordnung der Bereiche (30) mit verringerter Wärmeleitfähigkeit und der Bereiche (32) mit erhöhter Wärmeleitfähigkeit aufweisen.

5. Wärmetauscher nach einem der Ansprüche 1 bis 4, wobei die Platten (5) der Basiseinheit (4) umfangsseitig miteinander verklebt oder verschweißt sind.

6. Wärmetauscher nach einem der Ansprüche 1 bis 5, wobei das Polymer PVDF, PE, PVC, PVCC, PP oder PFA ist.

7. Wärmetauscher nach einem der Ansprüche 1 bis 6, wobei zwischen den Platten (5) der Basiseinheit (4) Fluidkanäle (7) zum Führen eines Heizfluids, Fluidkanäle (7) zum Führen eines zu kondensierenden Fluids und Fluidkanäle (7) zum Führen eines Kühlfluids ausgebildet sind, wobei die Fluidkanäle (7) zum Führen des Heizfluids und die Fluidkanäle (7) zum Führen des Kühlfluids durch mindestens einen Bereich (30) mit geringer Wärmeleitfähigkeit voneinander beabstandet sind.

8. Wärmetauscher nach einem der Ansprüche 1 bis 7, wobei die Basiseinheit (4) und/oder die Platten (5) der Basiseinheit (4) durch Schraubverbindungen oder durch Schnellspannverbindungen in dem Einbaurahmen (6, 8) angeordnet sind.

9. Anlage (1) zur thermischen Behandlung von mindestens einem Fluid, wobei die Anlage (1) mindestens einen Wärmetauscher (2) nach einem der vorhergehenden Ansprüche aufweist, wobei der Wärmetauscher (2) eine aus mindestens einem bereichsweise thermisch leitfähigen Polymer hergestellte Basiseinheit (4) aufweist, welche auf die Temperaturen des Fluids der Anlage (1) ausgelegt ist.

10. Anlage nach Anspruch 9, wobei der Wärmetauscher (2) als ein Plattenwärmeübertrager oder als ein Fallstromverdampfer in Plattenbauweise ausgestaltet ist.

11. Anlage nach Anspruch 9 oder 10, wobei die Anlage (1) mit mindestens einem ersten Wärmetauscher aus einem Kunststoff betreibbar ist, wobei der erste Wärmetauscher durch einen als Austauschteil ausgestalteten Wärmetauscher (2) gemäß einem der Ansprüche 1 bis 9 austauschbar ist.

## Claims

1. Heat exchanger (2), in particular for use in a distillation system, having an installation frame (6, 8) and a base unit (4) which is designed as a stack of multiple plates (5), wherein the plates (5) of the base unit (4) have an embossment for the purpose of forming fluid channels (7), wherein at least one fluid channel (7) is configured for conducting a fluid between at least two plates (5), wherein the plates (5) consist of a thermally conductive plastic, wherein at least one plate (5) of the base unit (4) has at least one region (30) with reduced thermal conductivity and at least one region (32) with increased thermal conductivity, **characterized in that** the plates of the base unit (4) are produced from a thermally conductive polymer with at least one filling material in the form of filler particles, and wherein the thermal conductivity of the regions (30, 32) of the plates (5) of the base unit (4) is set by way of alignment of filler particles (34) and/or by way of a filler-particle density.

2. Heat exchanger according to Claim 1, wherein the plates (5) of the base unit (4) are connected in a fluid-tight manner to one another at least peripherally, wherein each plate (5) has at least one opening (20, 22, 23, 25) for conducting a fluid through the fluid channel (7), wherein the at least one opening (20, 22, 23, 25) is connected to a fluid inlet (10, 13) and/or a fluid outlet (12, 15) of the installation frame (6, 8), wherein a peripheral border of the plates (5) is designed as a border region (30) with reduced thermal conductivity.

3. Heat exchanger according to Claim 1 or 2, wherein the border region (30) of the plates (5) peripherally surrounds at least one central region (32), wherein the central region (32) has increased thermal conductivity in comparison with the border region (30).

4. Heat exchanger according to one of Claims 1 to 3, wherein the plates (5) of the base unit (4) have an identical arrangement or a different arrangement of the regions (30) with reduced thermal conductivity and the regions (32) with increased thermal conductivity.

5. Heat exchanger according to one of Claims 1 to 4, wherein the plates (5) of the base unit (4) are adhesively bonded or welded to one another peripherally.

6. Heat exchanger according to one of Claims 1 to 5, wherein the polymer is PVDF, PE, PVC, PVCC, PP or PFA.

7. Heat exchanger according to one of Claims 1 to 6, wherein fluid channels (7) for conducting a heating fluid, fluid channels (7) for conducting a fluid to be condensed and fluid channels (7) for conducting a cooling fluid are formed between the plates (5) of the base unit (4), wherein the fluid channels (7) for conducting the heating fluid and the fluid channels (7) for conducting the cooling fluid are spaced apart from one another by at least one region (30) with reduced thermal conductivity.

8. Heat exchanger according to one of Claims 1 to 7, wherein the base unit (4) and/or the plates (5) of the base unit (4) are/is arranged in the installation frame (6, 8) by way of screw connections or by way of quick-clamping connections.

9. System (1) for thermally treating at least one fluid, wherein the system (1) has at least one heat exchanger (2) according to one of the preceding claims, wherein the heat exchanger (2) has a base unit (4) which is produced from at least one regionally thermally conductive polymer and which is designed for the temperatures of the fluid of the system (1).

10. System according to Claim 9, wherein the heat exchanger (2) is designed as a plate-type heat exchanger or as a falling-film evaporator.

11. System according to Claim 9 or 10, wherein operation of the system (1) with at least one first heat exchanger composed of a plastic is possible, wherein the first heat exchanger is able to be changed over for a heat exchanger (2) according to one of Claims 1 to 9 that is designed as an exchangeable part.

## Revendications

1. Échangeur de chaleur (2), notamment pour l'utilisation dans une installation de distillation, présentant un cadre de montage (6, 8) et une unité de base (4) conçue sous la forme d'un empilement de plusieurs plaques (5), les plaques (5) de l'unité de base (4) présentant un gaufrage pour former des canaux de fluide (7), au moins un canal de fluide (7) étant réalisé pour le passage d'un fluide entre au moins deux plaques (5), les plaques (5) étant constituées d'une matière plastique thermoconductrice, au moins une plaque (5) de l'unité de base (4) présentant au moins une zone (30) de conductivité thermique réduite et au moins une zone (32) de conductivité thermique accrue, **caractérisé en ce que** les plaques de l'unité de base (4) sont fabriquées à partir d'un polymère thermiquement conducteur avec au moins une charge sous forme de particules de charge, et la conductivité thermique des zones (30, 32) des plaques (5) de l'unité de base (4) étant réglée par une orientation de particules de charge (34) et/ou une densité de particules de charge.

2. Échangeur de chaleur selon la revendication 1, dans lequel les plaques (5) de l'unité de base (4) sont reliées entre elles de manière étanche aux fluides au moins sur la périphérie, chaque plaque (5) présentant au moins une ouverture (20, 22, 23, 25) pour guider un fluide à travers le canal de fluide (7), l'au moins une ouverture (20, 22, 23, 25) étant reliée à une entrée de fluide (10, 13) et/ou à une sortie de fluide (12, 15) du cadre de montage (6, 8), un bord périphérique des plaques (5) étant conçu sous la forme d'une zone de bord (30) de conductivité thermique réduite.

3. Échangeur de chaleur selon la revendication 1 ou 2, dans lequel la zone de bord (30) des plaques (5) entoure sur la périphérie au moins une zone centrale (32), la zone centrale (32) présentant une conductivité thermique accrue par rapport à la zone de bord (30).

4. Échangeur de chaleur selon l'une quelconque des revendications 1 à 3, dans lequel les plaques (5) de l'unité de base (4) présentent un agencement identique ou différent des zones (30) de conductivité thermique réduite et des zones (32) de conductivité thermique accrue.

5. Échangeur de chaleur selon l'une quelconque des revendications 1 à 4, dans lequel les plaques (5) de l'unité de base (4) sont collées ou soudées les unes aux autres sur la périphérie.

6. Échangeur de chaleur selon l'une quelconque des revendications 1 à 5, dans lequel le polymère est du PVDF, PE, PVC, PVCC, PP ou PFA.

7. Échangeur de chaleur selon l'une quelconque des revendications 1 à 6, dans lequel des canaux de fluide (7) pour le passage d'un fluide de chauffage, des canaux de fluide (7) pour le passage d'un fluide à condenser et des canaux de fluide (7) pour le passage d'un fluide de refroidissement sont réalisés entre les plaques (5) de l'unité de base (4), les canaux de fluide (7) pour le passage du fluide de chauffage et les canaux de fluide (7) pour le passage du fluide de refroidissement étant espacés les uns des autres par au moins une zone (30) de faible conductivité thermique.

8. Échangeur de chaleur selon l'une quelconque des revendications 1 à 7, dans lequel l'unité de base (4) et/ou les plaques (5) de l'unité de base (4) sont agencées dans le cadre de montage (6, 8) par des liaisons vissées ou par des liaisons à serrage rapide.

9. Installation (1) de traitement thermique d'au moins un fluide, l'installation (1) présentant au moins un échangeur de chaleur (2) selon l'une quelconque des revendications précédentes, l'échangeur de chaleur (2) présentant une unité de base (4) fabriquée à partir d'au moins un polymère thermiquement conducteur par zones, qui est adaptée aux températures du fluide de l'installation (1) .

10. Installation selon la revendication 9, dans laquelle l'échangeur de chaleur (2) est conçu sous la forme d'un échangeur de chaleur à plaques ou sous la forme d'un évaporateur à flux descendant de structure à plaques.

11. Installation selon la revendication 9 ou 10, dans laquelle l'installation (1) peut fonctionner avec au moins un premier échangeur de chaleur en une matière plastique, le premier échangeur de chaleur pouvant être remplacé par un échangeur de chaleur (2) selon l'une des revendications 1 à 9, conçu en tant que pièce de remplacement.
